# EUROPÄISCHE PATENTSCHRIFT

(11) **EP 1 070 382 B1**
(45) Veröffentlichungstag und Bekanntmachung des Hinweises auf die Patenterteilung: **26.12.2007**
(21) Anmeldenummer: 99924785.1
(22) Anmeldetag: 06.04.1999
(51) Int. Cl.: H02P 6/14

(54) **DREHZAHL-STEUERVORRICHTUNG FÜR EINEN ELEKTRONISCH KOMMUTIERTEN MEHRPHASIGEN ELEKTROMOTOR**
SPEED CONTROL DEVICE FOR AN ELECTRONICALLY COMMUTATED POLYPHASE ELECTRIC MOTOR
DISPOSITIF DE COMMANDE DE LA VITESSE DE ROTATION POUR UN MOTEUR ELECTRIQUE POLYPHASE COMMUTE ELECTRONIQUEMENT

(30) Priorität: 08.04.1998 DE 19815896
(43) Veröffentlichungstag der Anmeldung: 24.01.2001
(73) Patentinhaber: Siemens VDO Automotive AG, 93055 Regensburg (DE)
(72) Erfinder: MESCHIK, Martin, A-1110 Wien (AT); SCHERMANN, Markus, A-2700 Wiener Neustadt (AT)
(74) Vertreter: Maier, Daniel Oliver
(86) Internationale Anmeldenummer: PCT/DE1999/001044
(87) Internationale Veröffentlichungsnummer: WO 1999/053605

(56) Entgegenhaltungen:
- DE-A- 2 403 432
- DE-A- 19 630 036
- US-A- 3 769 555
- US-A- 4 283 664

## Beschreibung

Die Erfindung bezieht sich auf eine Drehzahl-Steuervorrichtung für einen elektronisch kommutierten mehrphasigen Elektromotor gemäß Patentanspruch 1; derartige Drehzahl-Steuervorrichtungen sind insbesondere in Verbindung mit permanenterregten elektronisch kommutierten mehrphasigen Elektromotoren in Kraftfahrzeugen für Lüfter- bzw. Pumpenantriebe mit relativ kleinem Anfahr-Lastmoment vorgesehen.

Bei bekannten Drehzahl-Steuervorrichtungen für elektronisch kommutierte mehrphasige Elektromotoren mit beliebig einstellbaren Drehzahlen ist eine Pulsweitenmodulation der Versorgungsspannung mit einer hohen, nicht hörbaren Pulsfrequenz von 20 kHz (US 5 563 481) bzw. eine Treiberschaltung mit hinsichtlich Amplitude und/oder Dauer verstellbarer Impulszüge (US 5 589 745) vorgesehen, wofür jeweils eine komplexe Hardware und/oder aufwendige Software erforderlich sind.

Eine Drehzahl-Steuervorrichtung für einen elektronisch kommutierten Elektromotor mit dem ersten Merkmal des Hauptanspruchs ist aus der GB-OS 1 563 015 (DE 26 39 055 B2) bzw. der US-A 4 283 664 bzw. der US-A 3 769 555 bekannt; dabei sind verschiedene Drehzahlen im ersten Fall durch Zuordnung bestimmter Pulsmuster zu definierten Drehzahlen, im zweiten Fall durch Regelung der speisenden Gleichspannungsquelle und im dritten Fall mittels eines Pulsbreiten und Pulsfrequenz einstellenden Pulsgenerators einstellbar.

Gemäß Aufgabe vorliegender Erfindung soll mit wesentlich gemindertem Hardware- bzw. Softwareaufwand trotzdem ein den geforderten Betriebsbedingungen voll genügender drehzahlsteuerbarer Antrieb mit beliebig einstellbaren Drehzahlen geschaffen werden. Die Lösung dieser Aufgabe gelingt erfindungsgemäß durch eine Drehzahl-Steuervorrichtung gemäß Patentanspruch 1; vorteilhafte Ausgestaltung der Erfindung sind jeweils Gegenstand der Unteransprüche.

Durch die über jeweils nur einen einfachen, insbesondere transistorbestückten, Phasen-Schalter unidirektionale ungepulste Bestromung der Motor-Phasen, die zweckmäßigerweise mit ihrem einen Sternpunkt direkt mit dem einen Pol der versorgenden Gleichspannungsquelle verbunden sind, ergibt sich hinsichtlich des Bauteileaufwandes eine aufwandsarme Drehzahl-Steuervorrichtung, wobei durch wechselweises Umschalten zwischen zwei verschiedenen Motordrehzahlen zugeordneten Zeitblock-Pulsmustern je nach Länge der Zeitblöcke bzw. nach deren Einschaltzeitpunkt auf einfache Weise Zwischendrehzahlen bei einer Umschaltfrequenz einstellbar sind, die unterhalb der Hörfrequenz liegt; diese Umschaltfrequenz ist lediglich von der mechanischen Zeitkonstanten des Antriebssystem derart abhängig, daß eine rucklose Drehzahlstellung gewährleistet ist. Die Umschaltverluste sind dabei gegenüber einem Konzept mit einer hochfrequenten Pulsweitenmodulierung wesentlich reduzierbar.

Die Erfindung sowie vorteilhafte Ausgestaltungen der Erfindung gemäß Merkmalen der Unteransprüche werden im folgenden anhand eines schematischen Ausführungsbeispiels in der Zeichnung näher erläutert; darin zeigen:
- FIG 1: das Blockschaltbild eines elektronisch kommutierten Elektromotors mit fünf über jeweils einen Phasenschalter in Abhängigkeit von Rotorstellungs-Sensorsignalen an eine speisende Gleichspannungsquelle anschließbaren Motor-Phasen,
- FIG 2: die Zuordnung von fünf Rotorstellungs-Sensorsignalen zu vier verschiedenen Zeitblock-Pulsmustern bei einem Elektromotor mit einem dreipolpaarigen dauermagneterregten Rotor,
- FIG 3: das wechselweise Umschalten zwischen zwei verschiedenen Zeitblock-Pulsmustern zur Erzielung einer Drehzahl, die etwa 70 % der Nenndrehzahl des Elektromotors entspricht.

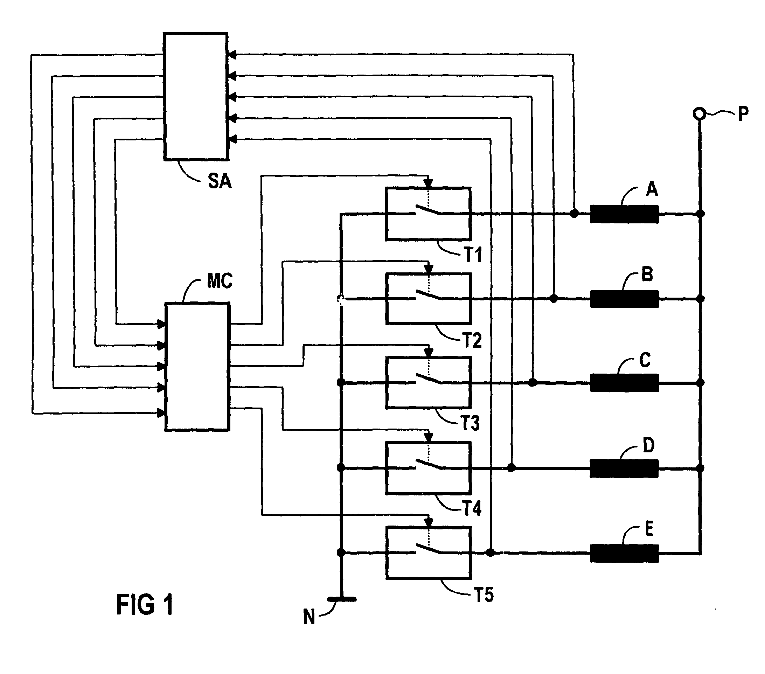

FIG 1 zeigt das Blockschaltbild eines elektronisch kommutierten Elektromotors mit fünf über den Statorumfang verteilten Motor-Phasen A;B;C;D;E, von denen jeweils jede über einen transistorbestückten Phasen-Schalter T1;T2;T3;T4;T5 an eine Gleichspannungsquelle P;N, z.B. eines Kraftfahrzeug-Bordnetzes, im Sinne einer ungepulsten unidirektionalen Bestromung während eines Zeitblocks T_{B} des jeweiligen Phasen-Schalters bestrombar ist. Die von einem hier nicht dargestellten permanenterregten Rotor mit sechs Permanentmagnet-Polen und somit drei Polpaaren in den Motor-Phasen A-E induzierten Spannungen werden als Rotorstellungs-Sensorsignale S1-S5 einer Sensorsignal-Auswertevorrichtung SA zugeführt. Von der Sensorsignal-Auswertevorrichtung SA werden Ansteuerbefehle für die Zeitblöcke T_{B} der Phasen-Schalter T1-T5 an einen als Bestandteil der Drehzahl-Steuervorrichtung bereits vorhandenen Microcontroller MC weitergegeben, der dann die Phasen-Schalter T1-T5 gemäß in ihm abgespeicherter, bestimmten Motordrehzahlen zugeordneter Zeitblock-Pulsmuster TB1-TB4 ansteuert.

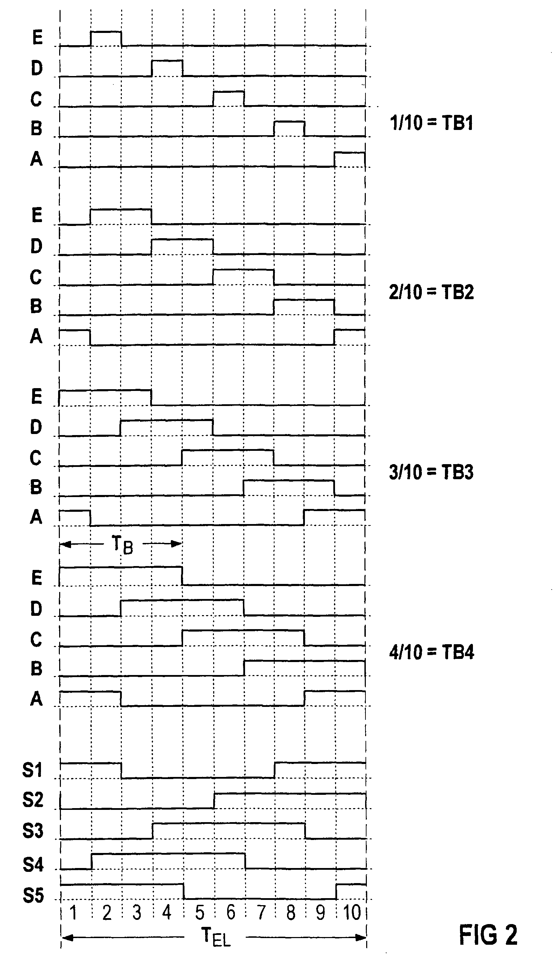

FIG 2 zeigt als Beispiel vier derartige Zeitblock-Pulsmuster TB1-TB4 mit jeweils unterschiedlichen Zeitblöcken T_{B} für die Zu- bzw. Abschaltung der einzelnen Motorphasen A-E an die Gleichspannungsquelle P;N in Abhängigkeit von den Rotorstellungs-Sensorsignalen S1-S5. Bei der hier angenommenen Bestückung des Rotors mit sechs Permanentmagnet-Polen wechseln Nord- bzw. Südpole am Rotorumfang alle 60° ab; eine elektrische Periode T_{EL} der induzierten Rotorstellungs-Signalspannung entspricht daher 120° mechanisch. Im unteren Teil der FIG 2 sind die induzierten Rotorstellungs-Sensorsignale S1-S5 über diese elektrische Periode T_{EL} eingetragen; es ist ersichtlich, daß sich insgesamt zehn Zeitschlitze ergeben, in denen unterschiedliche Rotorstellungen detektierbar sind. Der obere Teil von FIG 2 zeigt nunmehr in Abhängigkeit von den Rotorstellungs-Sensorsignalen S1-S5 die jeweiligen Zeitblöcke T_{B}, in denen in Abhängigkeit von den Rotorstellungs-Sensorsignalen S1-S5 die einzelnen Motorphasen A-E entsprechend verschiedener Zeitblock-Pulsmuster TB1-TB4 unidirektional und ungepulst bestromt sind.

Bei einem Zeitblock T_{B}, der 4/10 der maximal möglichen Bestromung einer Motorphase während einer elektrischen Periode T_{EL} entspricht, wird im vorgesehenen Beispiel die maximale Drehzahl des Elektromotors erreicht. In diesem sogenannten 100%-Blockbetrieb sind die Motor-Phasen jeweils für 2/5 T_{EL} in einer Stromrichtung bestromt, wobei jeweils dann zwei Motor-Phasen gleichzeitig gespeist sind.

Ausgehend von der Zuordnung der Nenndrehzahl des Elektromotors zu dem Zeitblock-Pulsmuster TB4 = 4/10 ergeben sich dann bei den dargestellten Zeitblock-Pulsmustern TB3 = 3/10 bzw. TB2 = 2/10 bzw. TB1 = 1/10 entsprechend niedrigere Drehzahlen.

Zweckmäßigerweise sind die Rotorstellungs-Sensorsignale S1-S5 und die zugehörigen Zeitblock-Pulsmuster TB1-TB4 digital verarbeitet, abgespeichert und zu Ansteuerungen der Phasenschalter T1-T5 verarbeitet. Die folgende Tabelle zeigt die digitale Zuordnung der bei Drehung des dreipolpaarigen permanenterregten Rotors in den fünf Motor-Phasen A-E induzierten Rotorstellungs-Sensorsignale S1-S5 zu den zugehörigen Zeitblock-Pulsmustern TB1-TB4 mit ihren jeweiligen Einschalt- bzw. Ausschalt-Zeitblöcken T_{B} für die Motor-Phasen A-E in der maximal möglichen Untergliederung auf zehn Zeitschlitze.

| Zeitschlitz | S1-S5 | TB1 1/10 | TB2 2/10 | TB3 3/10 | TB4 4/10 |
|---|---|---|---|---|---|
| | 54321 | EDCBA | EDCBA | EDCBA | EDCBA |
| 1. | 10001 | 00000 | 00001 | 10001 | 10001 |
| 2. | 11001 | 10000 | 10000 | 10000 | 10001 |
| 3. | 11000 | 00000 | 10000 | 11000 | 11000 |
| 4. | 11100 | 01000 | 01000 | 01000 | 11000 |
| 5. | 01100 | 00000 | 01000 | 01100 | 01100 |
| 6. | 01110 | 00100 | 00100 | 00100 | 01100 |
| 7. | 00110 | 00000 | 00100 | 00110 | 00110 |
| 8. | 00111 | 00010 | 00010 | 00010 | 00110 |
| 9. | 00011 | 00000 | 00010 | 00011 | 00011 |
| 10. | 10011 | 00001 | 00001 | 00001 | 00011 |

Ausgehend von den zweckmäßigerweise in vorgenannter Tabellenform in einem Festspeicher des für die Drehzahl-Steuervorrichtung vorgesehenen Mikrocontrollers MC abgelegten Zuordnung der Rotorstellungs-Sensorsignale S1-S5 zu den Ansteuersignalen der Phasen-Schalter T1-T5 der einzelnen Motorphasen A-E in Form von Zeitblock-Pulsmustern TB1-TB4 können erfindungsgemäß Zwischendrehzahlen durch gezielte Umschaltung zwischen den einzelnen Tabellen der Zeitblock-Pulsmuster erfolgen; neben einer Einstellung einer unterschiedlichen Länge der Zeitblöcke T_{B} kann auch eine Drehzahländerung durch unterschiedlichen Einschaltzeitpunkt der Zeitblöcke T_{B} entsprechend einer Gliederung der Zeitschlitze vorgesehen werden. Die Drehzahleinstellung durch wechselweises bzw. zeitorientiertes Schalten der abgespeicherten Zeitblock-Pulsmuster ist zweckmäßigerweise ebenfalls vordefiniert und abgespeichert. Die Umschaltfrequenz fᵤ, die einer Umschaltung zwischen verschiedenen Zeitblock-Pulsmustern zugrundeliegt, ist von der mechanischen Zeitkonstanten des Motorsystem abhängig und kann aufgrund der gegebenen Verhältnisse in vorteilhafter Weise im Bereich von einigen Hertz, d.h. insbesondere unterhalb der Hörfrequenzgrenze, vorgesehen werden.

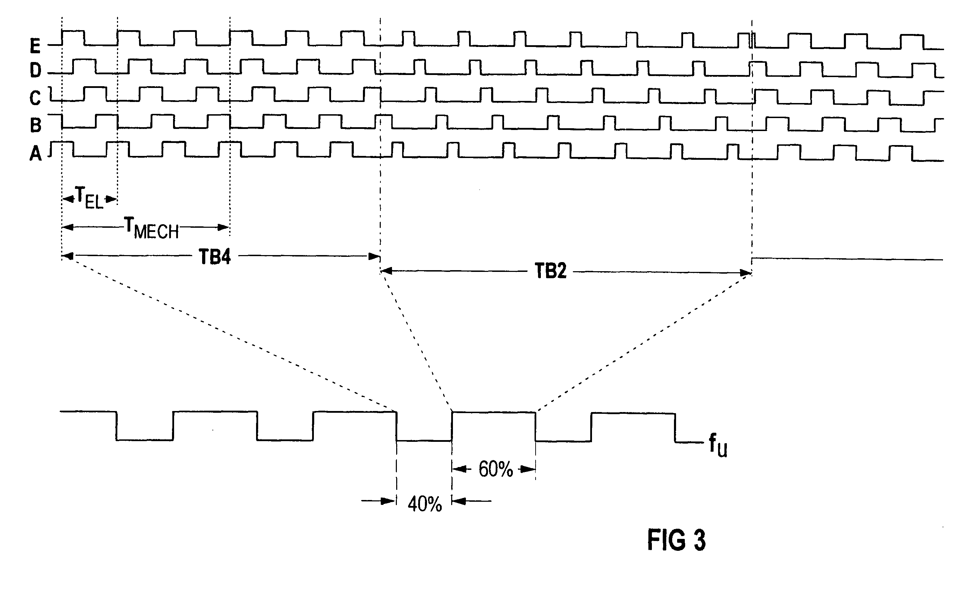

FIG 3 zeigt eine Ansteuerung der Motor-Phasen A-E für eine Drehzahl, die etwa 70 % der Nenndrehzahl entspricht. Dazu ist mit entsprechender Proportionalität eine Umschaltfrequenz fᵤ zwischen einem drehzahlhöheren Zeitblock-Pulsmuster und einem drehzahlniederen Zeitblock-Pulsmuster derart vorgesehen, daß 40 % der Periode ein Zeitblock-Pulsmuster TB4 = 4/10 und für die verbleibenden 60 % der Periode der Umschaltfrequenz fᵤ ein Zeitblock-Pulsmuster TB2 = 2/10 angewendet ist. Bei der angenommenen Polpaarzahl p = 3 beträgt die Zeit der elektrischen Periode T_{EL} den dritten Teil der Zeit der mechanischen Periode T_{MECH}.

Die Verweildauer in einem bestimmten Betriebszustand eines Zeitblock-Pulsmusters bestimmt die mittlere Drehzahl, die der Elektromotor einnimmt. In jedem Betriebszustand entwickelt der Elektromotor ein bestimmtes Antriebsmoment, das entsprechend der wirksamen bekannten Last zu einer bestimmten Betriebsdrehzahl führt. Somit ist für ein definiertes Lastmoment jedem Betriebszustand eine bestimmte Drehzahl zuteilbar und im Mikrocontroller für einen jeweiligen Abruf abspeicherbar.

Beim Anfahren des Motors kann auf einfache Weise eine zu hohe Strombelastung durch einen entsprechenden Anfahrmodus mit vom Mikrocontroller korrespondierend ausgewählten Zeitblock-Pulsmustern vermieden werden.

## Patentansprüche

1. Drehzahl-Steuervorrichtung für einen elektronisch kommutierten mehrphasigen Elektromotor
- mit in Abhängigkeit von Rotorstellungs-Sensorsignalen (S1-S5) über je einen Phasen-Schalter (T1-T5) im Sinne einer Drehmomentbildung aus einer Gleichspannungsquelle (P;N) während festlegbarer Zeitblöcke (T_{B}) unidirektional und ungepulst speisbaren Motor-Phasen (A-E);
- mit einer Einstellung beliebiger unterschiedlicher Motor-Zwischendrehzahlen durch wechselweises niederfrequentes Umschalten zwischen zumindest zwei verschiedenen, je einer bestimmten Motordrehzahl zugeordneten Zeitblock-Pulsmustern (TB1-TB4) mit einer unterhalb der Hörfrequenz, insbesondere im Bereich von 5 Hz bis 20 Hz, liegenden Umschaltfrequenz fᵤ.

2. Drehzahl-Steuervorrichtung nach Anspruch 1
- mit einer Abspeicherung von verschiedenen Motordrehzahlen zugeordneten Zeitblock-Pulsmustern (TB1-TB4), insbesondere in einem für die Steuervorrichtung vorgesehenen Mikrocontroller (MC).

3. Drehzahl-Steuervorrichtung nach Anspruch 1 und/oder 2
- mit einer Abspeicherung von Umschaltfrequenzen zur wechselweisen Umschaltung zwischen verschiedenen Zeitblock-Pulsmustern (TB1-TB4).

4. Drehzahl-Steuervorrichtung nach einem der Ansprüche 1 - 3
- mit einer digitalen Erfassung bzw. Weiterverarbeitung bzw. Abspeicherung der Rotorstellungs-Sensorsignale (S1-S5) bzw. zugeordneten Zeitblock-Pulsmuster (TB1-TB4).

5. Drehzahl-Steuervorrichtung nach einem der Ansprüche 1 - 4
- mit einer Anwendung auf einen elektronisch kommutierten Elektromotor mit fünf statorseitigen Motor-Phasen (A-E) und drei rotorseitigen Polpaaren und zugeordneten fünf Rotorstellungs-Sensorsignalen (S1-S5).

6. Drehzahl-Steuervorrichtung nach einem der Ansprüche 1 - 5
- mit einem Elektromotor, der einen dauermagneterregten Rotor aufweist.

## Claims

1. Speed control device for an electronically commutated multiphase electric motor
- with motor phases (A-E) which, during definable time blocks (T_{B}), can be supplied unidirectionally and in an unpulsed manner from a DC voltage source (P;N) as a function of motor position sensor signals (S1-S5) via respective phase switches (T1-T5) in terms of torque formation
- with setting of any different intermediate motor speeds by alternate low frequency switching between at least two different time block pulse patterns (TB1-TB4), each assigned to a particular motor speed, using a switching frequency fᵤ below audible frequency, in particular in the range 5 to 20 Hz.

2. Speed control device according to claim 1
- with storing of time block pulse patterns (TB1-TB4) assigned to different motor speeds, in particular in a microcontroller (MC) provided for the control device.

3. Speed control device according to claim 1 and/or 2
- with storing of switching frequencies for alternate switching between different time block patterns (TB1-TB4).

4. Speed control device according to one of claims 1 - 3
- with digital acquisition or further processing or storing of the rotor position sensor signals (S1-S5) or assigned time block pulse patterns (TB1-TB4).

5. Speed control device according to one of claims 1 - 4
- applied to an electronically commutated electric motor with five stator-side motor phases (A-E) and three rotor-side pole pairs and five assigned rotor position sensor signals (S1-S5).

6. Speed control device according to one of claims 1 - 5
- with an electric motor having a permanent magnet excited rotor.

## Revendications

1. Dispositif de commande de la vitesse de rotation pour un moteur électrique polyphasé commuté électroniquement
- avec des phases de moteur (A - E) alimentables unidirectionnellement et sans impulsions en fonction de signaux de détection de position du rotor (S1 - S5) par un commutateur de phase chacune (T1 - T5), au sens d'une formation de couple à partir d'une source de tension continue (P ; N) pendant des blocs temporels (T_{B}) définissables ;
- avec un réglage de vitesses de rotation intermédiaires du rotor quelconques par commutation à basse fréquence alternée entre au moins deux séquences d'impulsions de bloc temporel (TB1 - TB4) différentes, correspondant chacune à une vitesse de rotation du moteur définie, avec une fréquence de commutation fᵤ située en-dessous de la fréquence acoustique, en particulier dans la plage comprise entre 5 Hz et 20 Hz.

2. Dispositif de commande de la vitesse de rotation selon la revendication 1
- avec une mémorisation de séquences d'impulsions de bloc temporel (TB1 - TB4) correspondant à différentes vitesses de rotation du moteur, en particulier dans un microcontrôleur (MC) prévu pour le dispositif de commande.

3. Dispositif de commande de la vitesse de rotation selon la revendication 1 et/ou la revendication 2
- avec une mémorisation de fréquences de commutation pour la commutation alternée entre différentes séquences d'impulsions de bloc temporel (TB1 - TB4).

4. Dispositif de commande de la vitesse de rotation selon l'une des revendications 1 à 3
- avec une saisie ou un traitement ou une mémorisation numérique des signaux de détection de position du rotor (S1 - S5) ou des séquences d'impulsions de bloc temporel (TB1 - TB4) correspondantes.

5. Dispositif de commande de la vitesse de rotation selon l'une des revendications 1 à 4
- avec une application à un moteur électrique commuté électroniquement à cinq phases de moteur (A - E) côté stator, trois paires de pôles côté rotor et cinq signaux de détection de position du rotor (S1 - S5) correspondants.

6. Dispositif de commande de la vitesse de rotation selon l'une des revendications 1 à 5
- avec un moteur électrique comportant un rotor excité par un aimant permanent.
